# EUROPEAN PATENT APPLICATION

(11) **EP 4 503 598 A1**
(43) Date of publication of application: **05.02.2025**
(21) Application number: 22935170.5
(22) Date of filing: 29.03.2022
(51) Int. Cl.: H04N 7/18

(54) **IMAGE GENERATION DEVICE, IMAGE GENERATION METHOD, AND PROGRAM**

(71) Applicant: Sony Interactive Entertainment Inc., Tokyo 108-0075 (JP)
(72) Inventor: TOKUNAGA, Nodoka, Tokyo 108-0075 (JP); MATSUNAGA, Kiyobumi, Tokyo 108-0075 (JP); FUJIHARA, Masahiro, Tokyo 108-0075 (JP); TAKASE, Masaki, Tokyo 108-0075 (JP)
(74) Representative: D Young & Co LLP
(86) International application number: PCT/JP2022/015599
(87) International publication number: WO 2023/188022

(57) **Abstract**

There is provided an image generating apparatus that references scene information and generates image data of the scene represented by the scene information, as display image data, based on a predetermined first image generating parameter, the apparatus further generating the image data of the scene, as recording image data, based on a second image generating parameter different from the first image generating parameter.

## Description

### [Technical Field]

The present invention relates to an image generating apparatus, an image generating method, and a program for generating images to be displayed by a display apparatus.

### [Background Art]

In video games, for example, an image generating apparatus presents a user with a video by repeatedly performing the process of generating an image representing a virtual space, for example, and causing a display apparatus to display the generated image on its screen. At this time, the image generating apparatus may take a screenshot of the image generated by the image generating apparatus for display purposes and record the contents of the video, for subsequent disclosure to a third party.

### [Summary]

### [Technical Problem]

The image generated for display by the above-mentioned existing technology may or may not be suitable for viewing by a third party.

The present invention has been made in view of the above circumstances and provides, as an object, an image generating apparatus, an image generating method, and a program for displaying the contents generated and displayed in real time in a manner fit for subsequent viewing.

### [Solution to Problem]

According to one embodiment of the present invention, there is provided an image generating apparatus including a display image generating section configured to reference scene information and generate image data of a scene represented by the scene information, as display image data, based on a predetermined first image generating parameter, and a recording image generating section configured to generate the image data of the scene, as recording image data, based on a second image generating parameter different from the first image generating parameter.

According to another embodiment of the present invention, there is provided an image generating method including the steps of referencing scene information and generating image data of a scene represented by the scene information, as display image data, based on a predetermined first image generating parameter, and generating the image data of the scene, as recording image data, based on a second image generating parameter different from the first image generating parameter.

According to a further embodiment of the present invention, there is provided a program for causing a computer to execute the steps of referencing scene information and generating image data of a scene represented by the scene information, as display image data, based on a predetermined first image generating parameter, and generating the image data of the scene, as recording image data, based on a second image generating parameter different from the first image generating parameter. This program may be provided in a manner of being recorded on a computer-readable non-temporary information storage medium.

### [Brief Description of Drawings]

[FIG. 1]

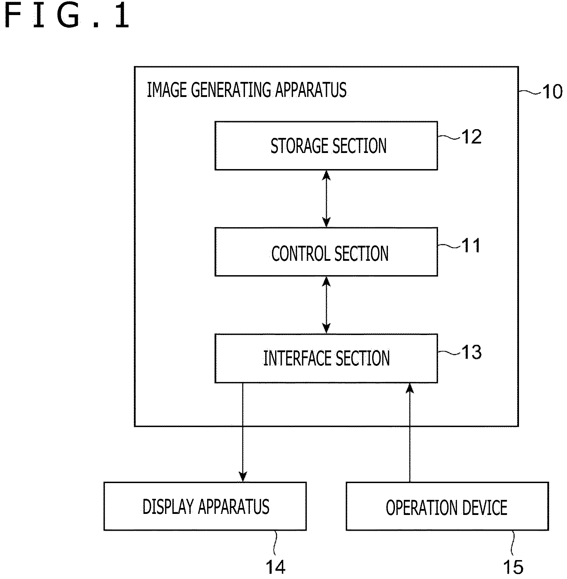

   FIG. 1 is a configuration block diagram depicting a configuration of an image generating apparatus embodying the present invention.
[FIG. 2]

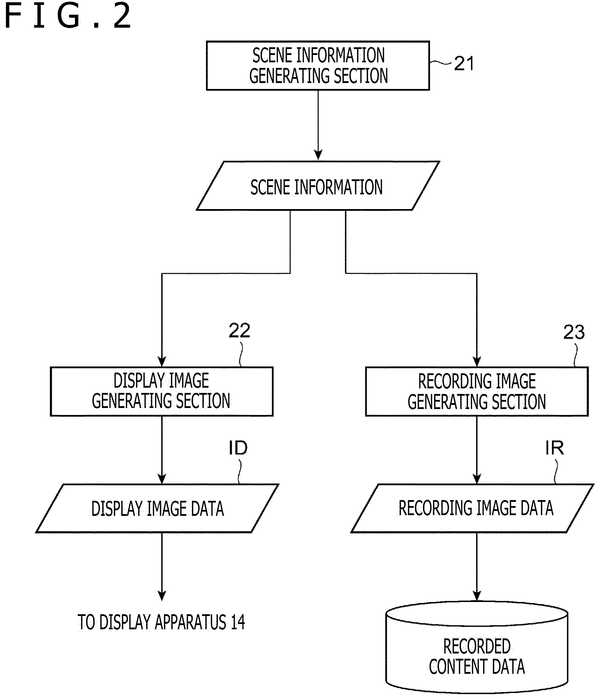

   FIG. 2 is a function block diagram depicting functions of the image generating apparatus embodying the present invention.
[FIG. 3]

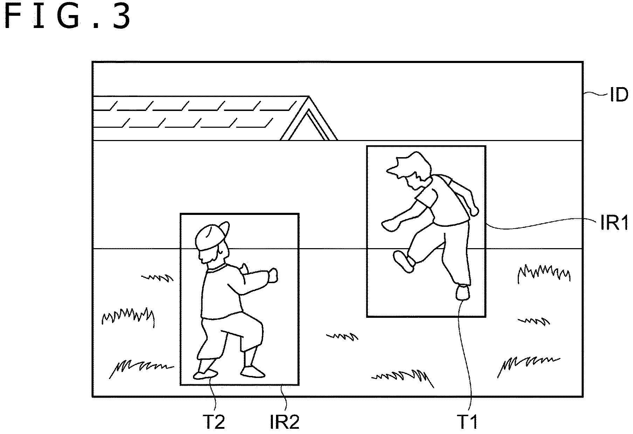

   FIG. 3 is a schematic diagram explanatory of exemplary recording image data.

### [Description of Embodiment]

One preferred embodiment of the present invention is described below in detail with reference to the accompanying drawings.

FIG. 1 is a configuration block diagram depicting the configuration of an image generating apparatus 10 as one embodiment of the present invention. The image generating apparatus 10 may be a home-use game machine, a portable game machine, or a personal computer, for example. As illustrated in FIG. 1, the image generating apparatus 10 includes a control section 11, a storage section 12, and an interface section 13. Further, the image generating apparatus 10 is connected with a display apparatus 14 and an operation device 15.

The control section 11 includes at least one processor such as a central processing unit (CPU) that performs various kinds of information processing by executing programs stored in the storage section 12. Note that a specific example of the processing performed by the control section 11 of this embodiment will be discussed later. The storage section 12 includes at least one memory device such as a random access memory (RAM) that stores the programs to be carried out by the control section 11 as well as the data to be processed by the programs.

The interface section 13 is an interface for data communication with the display apparatus 14 and the operation device 15. By way of the interface section 13, the image generating apparatus 10 is connected to the display apparatus 14 and the operation device 15 in a wired or wireless manner. Specifically, the interface section 13 includes a multimedia interface for transmitting to the display apparatus 14 a video signal supplied from the image generating apparatus 10. The interface section 13 also includes a data communication interface for receiving signals indicative of the contents of operations performed by the user on the operation device 15. The interface section 13 may further include a communication interface for transmitting and receiving data to and from other communication devices over communication networks such as the Internet.

The display apparatus 14 displays on its screen a video representing the video signal supplied from the image generating apparatus 10. The display apparatus 14 may be a non-portable display apparatus, such as a home-use television receiver, or a portable display apparatus, for example. Alternatively, the display apparatus 14 may be a head-mounted display apparatus capable of presenting a stereoscopic vision by presenting different videos to the user's right and left eyes.

The operation device 15 may be a controller of the home-use game machine, for example, that receives input operations from the user. The operation device 15 is connected with the image generating apparatus 10 in a wired or wireless manner. The operation device 15 transmits to the image generating apparatus 10 operation signals representative of the contents of the input operations received from the user. Note that the operation device 15 may be of various shapes, such as a device hand-held by the user when in use or a device attached to the user's hand upon use, for example.

The functions implemented by the image generating apparatus 10 are described below with reference to the function block diagram of FIG. 2. As depicted in FIG. 2, the image generating apparatus 10 functionally includes a scene information generating section 21, a display image generating section 22, and a recording image generating section 23. These functions are implemented by the control section 11 operating in accordance with one or multiple programs stored in the storage section 12. These programs may be provided to the image generating apparatus 10 via a communication network such as the Internet or may be provided in a manner of being stored on a computer-readable information storage medium such as an optical disk.

The scene information generating section 21 determines the contents of the scene to be presented to the user, and generates scene information for identifying the contents thus determined. The scene information generating section 21 may, for example, be implemented by an application program such as a video game program.

For this embodiment, it is assumed that the scene to be presented to the user is the state inside a virtual three-dimensional space (virtual space). In this case, the scene information generating section 21 determines, as the scene information, such information as that for identifying the shapes and appearances of objects to be arranged in the virtual space as well as the positions of the objects in the virtual space.

Also, the scene information generating section 21 further determines information for identifying a portion actually targeted for display in the scene determined by the scene information. Specifically, the scene information generating section 21 determines a viewpoint position and a visual field direction established inside the virtual space as per instructions given by the user, for example. Further, in the case where the display apparatus 14 is a head-mounted display apparatus worn by the user, the scene information generating section 21 may determine the visual field direction in a manner synchronized with the direction of the user's face. Visual field direction information representing the direction of the user's face in this case may be acquired by various methods such as by use of the result of detection by attitude sensors incorporated in the display apparatus 14, for example. Further, in the case where the user is to be presented not only with the state inside the virtual space but also with other information, the scene information generating section 21 determines a display object indicative of the contents of the other information along with the position where the object is to be placed. In video games, for example, there are cases where such contents as information regarding the current playing status, information regarding the characters involved, and map information is displayed in a manner superposed on the state inside the virtual space on the screen of the display apparatus 14. Such information should preferably be displayed in a predetermined position within the screen regardless of the state inside the virtual space or the viewpoint position. In the description that follows, the object representing contents of such information will be referred to as an information object. The scene information generating section 21 determines the contents of the information to be included in the information object as well as the position where the information object is to be displayed inside the screen, and causes what is determined to be included in the scene information.

By referencing the scene information generated by the scene information generating section 21, the display image generating section 22 generates image data of the scene represented by the scene information, as display image data ID. Here, the display image generating section 22 generates the display image data ID, based on predetermined first image generating parameters. The display image generating section 22 may be implemented by a program such as a rendering engine independent of the application program implementing the scene information generating section 21.

Specifically, the display image generating section 22 generates an image representing the state of the virtual space in which various objects included in the scene information are arranged, as the display image data ID as viewed from the viewpoint position and in the visual field direction designated by the scene information generating section 21. Since the entire virtual space cannot be displayed at once on the screen of the display apparatus 14, the display image data ID constitutes image data representing a portion of the scene (i.e., state of the virtual three-dimensional space) represented by the scene information provided by the scene information generating section 21. Also, the display image generating section 22 generates as needed the display image data ID in a manner superposing the contents of the information object included in the scene information on the contents rendered in the virtual space.

Note that, in the case where the display apparatus 14 provides a stereoscopic vision based on parallax, the user's right and left eyes are each presented with a different image. This means that the display image generating section 22 generates a right-eye image and a left-eye image independent of each other. Whereas only one of the right- and left-eye images will be discussed in the ensuing paragraphs for purpose of explanation, the image generating apparatus 10 may be assumed to perform similar processes on both the right-eye image and the left-eye image.

The display image generating section 22 transmits to the display apparatus 14 a video signal including the generated display image data ID. This allows the display apparatus 14 to display a display image on its screen and present it to the user. The image generating apparatus 10 of this embodiment causes the scene information generating section 21 to perform the process of generating the scene information and the display image generating section 22 to execute the process of generating the display image data ID as well as the process of transmitting the generated display image data ID to the display apparatus 14, repeatedly at a predetermined frame rate. This enables the display apparatus 14 to display the video representing the state of the virtual space changing over time.

Here, the first image generating parameters used for generating the display image data ID may include parameters for defining the region actually targeted for display in the scene determined by the scene information. In this embodiment, the information regarding the viewpoint position and visual field direction is used to define the display target region as discussed above.

Also, the first image generating parameters may include parameters determined according to the display performance of the display apparatus 14. As a specific example, the resolution of the display image data ID is determined according to the resolution and size of images that can be displayed by the display apparatus 14. For example, when the display apparatus 14 is connected anew, the display image generating section 22 acquires information regarding the display performance of the connected display apparatus 14 (e.g., information regarding the size of images that can be displayed), and determines the resolution for generating the display image data ID according to contents of the acquired information. The parameters for defining the region in the scene included in the display image data ID (e.g., viewing angle) may also be determined in keeping with the display performance of the display apparatus 14.

By referencing the scene information generated by the scene information generating section 21, the recording image generating section 23 generates the image data of the scene represented by the scene information, as recording image data IR. Here, the recording image generating section 23 generates the recording image data IR in reference to the same scene information referenced by the display image generating section 22 upon generating the display image data ID and by using second image generating parameters different from the first image generating parameters used to generate the display image data ID. Specific examples of the second image generating parameters will be discussed later.

The process performed by the recording image generating section 23 to generate the recording image data IR may be similar to the process performed by the display image generating section 22 to generate the display image data ID except that the parameters used for the generation are different. Further, during execution of the process of generating the display image data ID by the display image generating section 22, the recording image generating section 23 may parallelly perform the process of generating the recording image data IR in reference to the same scene information.

According to instructions from the user, for example, the recording image generating section 23 may generate and save one piece of recording image data IR. As a specific example, in the case where the user gives instructions to take a screenshot by performing input operations on the operation device 15, the recording image generating section 23 generates the recording image data IR of one still image by referencing the scene information used to generate the display image data ID at the time of giving the instructions. Although the recording image data IR targets the same scene as that of the display image data ID, the recording image data IR is different from the display image data ID because the recording image data IR is generated by different image generating parameters.

In the description that follows, the recording image data IR generated individually in this manner will be referred to as the recorded still image data.

Also, the recording image generating section 23 may generate multiple pieces of recording image data IR corresponding to multiple pieces of display image data ID generated chronologically. In this case, the recording image generating section 23 starts the process of generating the recording image data IR according to the user's instructions to start recording, for example. Further, until the process of generating the recording image data IR is terminated by the user giving instructions to end recording, for example, every time the display image generating section 22 generates one piece of display image data ID, the recording image generating section 23 generates one piece of recording image data IR with use of the scene information used to generate the display image data ID. By performing the above processes repeatedly over a predetermined time period, the recording image generating section 23 generates as many pieces of recording image data IR as those of the display image data ID targeting the same scene and displayed by the display apparatus 14 during the period.

In this case, the recording image generating section 23 saves, as recorded video data, the data constituted by multiple pieces of recording image data IR generated chronologically over the period targeted for recording. Note that the recorded video data may be either data in a form including multiple pieces of unmodified recording image data IR, or the data obtained by encoding the recording image data IR by a predetermined video encoding method. Further, in the description that follows, the recorded still image data and/or the recording video data to be saved by the image generating apparatus 10 will be generically referred to as the recorded content data.

The user of the image generating apparatus 10 may upload the recorded content data saved by the recording image generating section 23 to a given server apparatus or may disclose the recorded content data to other users through distribution in response to their requests, for example. Also, the user may intentionally edit the contents of the recorded still image data or recorded video data before disclosing the data to third parties.

Explained below are some specific examples of the process performed by the recording image generating section 23 to generate the recoding image data IR, based on the second image generating parameters.

As a first example, the recording image generating section 23 may generate the recording image data IR at a resolution different from that of the display image data ID. More specifically, the recording image generating section 23 may generate the recording image data IR at a resolution higher than that of the display image data ID. As discussed above, the display image generating section 22 generates the display image data ID at the resolution determined according to the display performance of the display apparatus 14. However, the recording image data IR may possibly be displayed by a display apparatus whose resolution is higher than that of the display apparatus 14. In that sense, the recording image generating section 23 need not necessarily generate the recording image data IR at the resolution complying with the display performance of the display apparatus 14. The recording image generating section 23 may hence generate the recording image data IR at a resolution higher than that of the display image data ID while targeting the same region as that targeted by the display image data ID.

Particularly, in the case where one piece of recording image data IR is saved as the recorded still image data, the processing load required for the rendering process and the data capacity necessary for saving the data are less than those required for the video data. For this reason, the recording image generating section 23 can generate and save the recording image data IR with a relatively large margin for requirements. It is to be noted that where the recording image generating section 23 saves not only the recorded still image data but also the recorded video data, the recording image generating section 23 may generate multiple pieces of recording image data IR constituting the recorded video data at a resolution higher than that of the display image data ID.

Also, the recording image generating section 23 may generate the recording image data IR by using parameters different from those for generating the display image data ID in terms of color space and bit depth for image generation.

As a second example, given the scene determined by the scene information, the recording image generating section 23 may generate the recording image data IR targeting a region different in size from the region included in the display image data ID. Specifically, the recording image generating section 23 generates the recording image data IR including the contents of the display image data ID and targeting a region wider than that of the display image data ID, for example. As a result, although the data size of the recording image data IR becomes larger than that of the display image data ID, the recording image generating section 23 can save the recorded content data including the state of a region outside the range displayed on the screen of the display apparatus 14.

As a third example, the recording image generating section 23 may generate the recording image data IR indicative of a state in which the virtual space is viewed in a visual field direction different from the visual field direction used to generate the display image data ID. In this case, as in the second example, the recording image data IR targeting a region different from the region included in the display image data ID is generated. For example, as part of the second image generating parameters, the recording image generating section 23 determines a new visual field direction in reference to the visual field direction used to generate the display image data ID. The recording image generating section 23 then generates the recording image data IR indicating the state in which the virtual space is viewed in the newly determined visual field direction.

Specifically, the recording image generating section 23 may generate the recording image data IR by using the parameters of a visual field direction deviating, in a predetermined direction (e.g., crosswise) by a predetermined angle, from the visual field direction used to generate the display image data ID. Alternatively, the recording image generating section 23 may generate the recording image data IR in a visual field direction opposite to the visual field direction used to generate the display image data ID.

Using the above-described techniques makes it possible to generate the recorded content data representing the state at a given position in the virtual space not included in the display image data ID (i.e., position not viewed by the user viewing the display apparatus 14). For example, when the recording image data IR of this type is generated and saved at the time when the user gives instructions to image the state in the opposite direction, the user can subsequently check the state outside the game screen that the user was watching. Note that, preferably, the recording image generating section 23 may generate the recording image data IR in multiple visual field directions determined in reference to the visual field direction used to generate the display image data ID.

As a fourth example, the recording image generating section 23 may determine the position of the region to be included in the recording image data IR, according to the position of a predetermined object inside the virtual space included in the scene information. As in the second and third examples, this example is also one where the recording image data IR targeting a region different from that of the display image data ID is generated. What is different from the preceding examples is that the position of the region to be included in the recording image data IR is determined in reference to the information regarding the object included in the scene information.

Specifically, the recording image generating section 23 determines the region to be included in the recording image data IR in reference to the position of an object of interest T. In this example, the object of interest T may be a character object targeted for operation by the user, or an object expected to draw the user's particular attention (e.g., an enemy object targeted for attack by the user). The object of interest T may thus be an object designated by the scene information generating section 21.

For example, the recording image generating section 23 determines the position of the region to be included in the recording image data IR in such a manner that the designated object of interest T is arranged at the center of the recording image data IR. This makes it possible to save the recorded content data that allow the object of interest T and the state of its surroundings to be checked. In particular, during game play, there are cases where the user causes the display apparatus 14 to display a position away from the object of interest T by changing the visual field direction in order to check the state of the surroundings. In such cases, the recording image generating section 23 can save the recorded content data conducive to checking the state of the object of interest T, by generating the recording image data IR including a region different from that of the display image data ID in reference to the target of interest T.

Alternatively, the recording image generating section 23 may generate the recording image data IR by extracting the object of interest T and the region surrounding it from the display image data ID. As a specific example, the recording image generating section 23 may generate the recording image data IR by extracting from the display data ID the object of interest T and a region of a predetermined size surrounding the object. This makes it possible easily to generate the recorded still image data or the recorded video data focusing only on a particular object (e.g., character object for operation by the user).

The size of the extraction in the above example may be determined as designated by the scene information generating section 21 or according to the contents previously set by the user. For example, the scene information generating section 21 designates the size of an extraction target region centering on the object of interest T in consideration of the size and moving speed of the target object of interest T itself.

Further, in the case where the scene information includes multiple objects of interest T, the recording image generating section 23 may generate multiple pieces of recording image data IR targeting these objects of interest T. FIG. 3 depicts a specific example in which multiple pieces of recording image data IR are generated. In the example of this figure, the display image data ID includes two objects of interest T1 and T2 targeted by two pieces of recording image data IR1 and IR2 having been generated.

As a fifth example, in the case where the scene targeted by the display image data ID for display is constituted by multiple types of objects, the recording image generating section 23 may generate the recording image data IR constituted by some of these types of objects.

In this example, the scene targeted for rendering is assumed to be constituted by multiple types of objects, the same type of objects belonging to the same layer. The display image generating section 22 overlays multiple layers on each other to generate the image data making up the display image data ID.

As a specific example, as discussed above, the display image generating section 22 renders into a single layer image a space image indicating the state of objects in the virtual space as viewed from a given viewpoint. The display image generating section 22 then overlays the rendered layer image with a layer image indicating the contents of the information object and generates the display image data ID. In this case, the recording image generating section 23 renders a layer image representing the state inside the virtual space and a layer image indicative of the contents of the information object independently of each other, and saves these layer images as the recording image data IR. Alternatively, the recording image generating section 23 may generate only a layer image indicating the state inside the virtual space, as the recording image data IR. In the case where the information object includes such information as character status, that information should be allowed to be checked during game play but may interfere with viewing of subsequently displayed game play contents.

For this reason, the images excluding the contents of the information object may be generated as the recording image data IR for subsequent viewing with no display of the information object.

The objects arranged in the same virtual space may include various types of objects. For example, an object making up the background whose position is basically unchanged in the virtual space and a character object moving inside the space in association with the progress of the game are generally included in the same scene.

The display image generating section 22 generates the display image data ID in a manner including all these objects. By contrast, the recording image generating section 23 may independently render each different type of object when generating the recording image data IR. This makes it possible to individually generate and save the image of the background layer and the image of the character layer, among others, as the recording image data IR.

As discussed above, the recording image data IR generated for each of different types of objects based on the same scene may be subsequently displayed individually or in a manner superposed on one another. For example, when the recording image data IR including the character object is displayed individually, the user can subsequently view a video focusing only on the movement of the character. When multiple pieces of recording image data IR generated at once targeting the same scene are superposed on one another to make up the display target, it is possible to subsequently view images similar to the display image data ID viewed by the user at the time when these pieces of the recording image data IR were recorded.

The recording image generating section 23 may generate the recording image data IR by using a combination of the above-described techniques. For example, the recording image generating section 23 may generate the recording image data IR at a resolution higher than that of the display image data ID while targeting a region different from that of the display image data ID.

Also, the recording image generating section 23 may allow the recorded content data to include not only the recording image data IR but also related information acquired upon generation of the recording image data IR. For example, the recording image generating section 23 may cause the recorded content data to include information indicating the position of the object of interest T used to generate the recording image data IR, as well as such information as the viewpoint position and the visual field direction. Further, the recording image generating section 23 may cause the recorded content data to include information indicative of the contents of operations performed by the user on the operation device 15 upon display of the display image data ID. These pieces of information may be subsequently used by the user to display or edit the contents of the recorded content data.

As discussed above, upon generation of the display image data ID, the image generating apparatus 10 of this embodiment generates in parallel the recording image data IR representing the same scene as that of the display image data ID, by using image generating parameters different from those for the display image data ID. This makes it easier for other users to subsequently view the scene.

The embodiments of the present invention are not limited to those discussed above. For example, in the foregoing description, it has been assumed that the scene information generated by the scene information generating section 21 indicates the state inside the three-dimensional virtual space and that the display image data ID constitutes images indicative of the state within the three-dimensional virtual space. However, this is not limitative of the present invention. Alternatively, the scene information generated by the scene information generating section 21 may indicate the contents of a two-dimensional scene. In such a case, upon generation of the display image data ID including multiple objects making up the scene, the recording image generating section 23 may generate the recording image data IR by using the second image generating parameters different from the first image generating parameters used to generate the display image data ID.

In the foregoing description, it has also been assumed that the image generating apparatus 10 is an information processing apparatus that is positioned relatively close to the user and directly connected with the display apparatus 14 and the operation device 15. However, this is not limitative of the present invention. Alternatively, in services such as what is generally called a cloud gaming service, for example, the images to be displayed on the screen of the display apparatus 14 may be generated not by a client apparatus used by the user and connected directly with the display apparatus 14 and the operation device 15 but by a server apparatus connected with the client apparatus via a communication network. In such a case, the server apparatus connected via the communication network with the client apparatus used by the user may be allowed to function as the image generating apparatus 10 of the present invention. In this case, operation information, among others, obtained by the client apparatus regarding the operation device 15 is transmitted via the communication network to the image generating apparatus 10. In reference to the received information, the image generating apparatus 10 generates the display image data ID and sends it to the client apparatus. In turn, the client apparatus causes the received display image data ID to be displayed on the screen of the display apparatus 14. Meanwhile, the image generating apparatus 10 generates the recording image data IR along with the display image data ID as discussed above. The recording image data IR thus generated may be stored in the image generating apparatus 10 itself or transmitted to the client apparatus for storage therein.

The present disclosure may include the following modes.

### [Item 1]

An image generating apparatus including:
one or more processors, in which
the one or more processors
reference scene information and generate image data of a scene represented by the scene information, as display image data, based on a predetermined first image generating parameter, and
generate the image data of the scene as recording image data based on a second image generating parameter different from the first image generating parameter.

### [Item 2]

The image generating apparatus according to item 1, in which the first image generating parameter and the second image generating parameter include at least a resolution of the image data to be generated, and
the one or more processors generate the recording image data at a resolution different from a resolution of the display image data.

### [Item 3]

The image generating apparatus according to item 1, in which the first image generating parameter and the second image generating parameter include at least information representing a region in the scene included in the generated image data, and
the one or more processors generate the recording image data including a region different from the region in the scene included in the display image data.

### [Item 4]

The image generating apparatus according to item 3, in which the scene includes at least one object,
the second image generating parameter includes information representing a region to be extracted from the scene, the scene being determined in reference to information regarding a position of the object, and the one or more processors generate as the recording image data an image inside the region represented by the information included in the second image generating parameter.

### [Item 5]

The image generating apparatus according to any one of items 1 to 4, in which the scene includes a plurality of objects, and the one or more processors generate the image data of the scene from which at least one of the objects in the scene is extracted, as the recording image data, based on the second image generating parameter.

### [Item 6]

The image generating apparatus according to item 5, in which one of the objects is a character object included in the scene.

### [Item 7]

The image generating apparatus according to any one of items 1 to 4, in which the scene includes a plurality of types of objects, and
the one or more processors generate one or a plurality of pieces of the image data of the scene, each piece of the image data including a same type of object, as the recording image data, based on the second image generating parameter.

### [Item 8]

An image generating method including:
referencing scene information and generating image data of a scene represented by the scene information, as display image data, based on a predetermined first image generating parameter; and
generating the image data of the scene, as recording image data, based on a second image generating parameter different from the first image generating parameter.

### [Item 9]

A computer-readable non-transitory information storage medium storing a program for causing a computer to execute processes of:
referencing scene information and generating image data of a scene represented by the scene information, as display image data, based on a predetermined first image generating parameter; and
generating the image data of the scene, as recording image data, based on a second image generating parameter different from the first image generating parameter.

### [Reference Signs List]

- 10:: Image generating apparatus
- 11:: Control section
- 12:: Storage section
- 13:: Interface section
- 14:: Display apparatus
- 15:: Operation device
- 21:: Scene information generating section
- 22:: Display image generating section
- 23:: Recording image generating section

## Claims

1. An image generating apparatus comprising:
a display image generating section configured to reference scene information and generate image data of a scene represented by the scene information, as display image data, based on a predetermined first image generating parameter; and
a recording image generating section configured to generate the image data of the scene as recording image data based on a second image generating parameter different from the first image generating parameter.

2. The image generating apparatus according to claim 1, wherein the first image generating parameter and the second image generating parameter include at least a resolution of the image data to be generated, and the recording image generating section generates the recording image data at a resolution different from a resolution of the display image data.

3. The image generating apparatus according to claim 1, wherein the first image generating parameter and the second image generating parameter include at least information representing a region in the scene included in the generated image data, and
the recording image generating section generates the recording image data including a region different from the region in the scene included in the display image data.

4. The image generating apparatus according to claim 3, wherein the scene includes at least one object,
the second image generating parameter includes information representing a region to be extracted from the scene, the scene being determined in reference to information regarding a position of the object, and
the recording image generating section generates as the recording image data an image inside the region represented by the information included in the second image generating parameter.

5. The image generating apparatus according to any one of claims 1 to 4, wherein the scene includes a plurality of objects, and
the recording image generating section generates the image data of the scene from which at least one of the objects in the scene is extracted, as the recording image data, based on the second image generating parameter.

6. The image generating apparatus according to claim 5, wherein one of the objects is a character object included in the scene.

7. The image generating apparatus according to any one of claims 1 to 4, wherein the scene includes a plurality of types of objects, and
the recording image generating section generates one or a plurality of pieces of the image data of the scene, each piece of the image data including a same type of object, as the recording image data, based on the second image generating parameter.

8. An image generating method comprising steps of:
referencing scene information and generating image data of a scene represented by the scene information, as display image data, based on a predetermined first image generating parameter; and
generating the image data of the scene, as recording image data, based on a second image generating parameter different from the first image generating parameter.

9. A program for causing a computer to execute steps of:
referencing scene information and generating image data of a scene represented by the scene information, as display image data, based on a predetermined first image generating parameter; and
generating the image data of the scene, as recording image data, based on a second image generating parameter different from the first image generating parameter.
